Europäisches Patentamt

European Patent Office

Office européen des brevets

(11) Veröffentlichungsnummer: **0 088 401**
**B1**

(12) **EUROPÄISCHE PATENTSCHRIFT**

(45) Veröffentlichungstag der Patentschrift:
30.04.86

(21) Anmeldenummer: 83102147.2

(22) Anmeldetag: 04.03.83

(51) Int. Cl.⁴: **B 23 K 31/04**

(54) Vorrichtung zum automatischen Anlöten von Hartmetallzähnen.

(30) Priorität: 05.03.82 DE 3208068

(43) Veröffentlichungstag der Anmeldung:
14.09.83 Patentblatt 83/37

(45) Bekanntmachung des Hinweises auf die Patenterteilung:
30.04.86 Patentblatt 86/18

(84) Benannte Vertragsstaaten:
AT CH FR GB IT LI NL SE

(56) Entgegenhaltungen:
DE - A - 2 227 063
GB - A - 2 092 045
US - A - 3 960 310

(73) Patentinhaber: **Kähny Maschinenbau GmbH,
Oberbrüdenerstrasse 60, D-7150 Backnang-Steinbach
(DE)**

(72) Erfinder: **Kähny, Peter, Forststrasse 8,
D-7151 Auenwald 2 (DE)**
Erfinder: **Gerling, Norbert, Mozartstrasse 3,
D-7152 Aspach 1 (DE)**

(74) Vertreter: **Strasser, Wolfgang, Dipl.-Phys, Patentanwälte
Strohschänk, Uri & Strasser Innere Wiener Strasse 8,
D-8000 München 80 (DE)**

## Beschreibung

Die Erfindung betrifft eine Vorrichtung zum automatischen Anlöten von Hartmetallzähnen an die Zacken eines Kreissägeblattes gemäß dem Oberbegriff des Anspruches 1.

Eine bekannte Vorrichtung dieser Art weist einen eigenen Drehtisch auf, bei dem in einer kreisförmigen Anordnung um eine vertikale Achse drehbar acht Greifzangen vorgesehen sind, die sich unter einer vertikal über der Ebene der Greifzangen angeordneten Hartmetallzahn-Zuführeinrichtung hindurchbewegen, aus der sie jeweils einen Hartmetallzahn übernehmen. Anschließend bewegt sich jede der Greifzangen auf ihrer Kreisbahn zu einer Flußmittel-Zuführeinrichtung weiter, aus der von oben auf die nach oben weisende Lötseite des Hartmetallzahns Flußmittel aufgetropft wird. Danach gelangt jede der Zangen in eine Stellung, in der ein Lotplättchen, das beispielsweise aus Messing besteht, auf die mit Flußmittel beschichtete Oberseite des Hartmetallzahns aufgelegt wird. In einer weiteren Stellung wird die jeweils aus einem Hartmetallzahn, aufgetropftem Flußmittel und einem aufgelegten Lotplättchen bestehende Einheit von der sie transportierenden Greifzange an eine Löthalterung übergeben, die sie radial vom Drehtisch weg in eine Lötposition bewegt, in der sie gegen einen Zacken des zu lötenden Kreissägeblattes angedrückt wird.

Diese bekannte Vorrichtung ist aufgrund der vielen Greifzangen, die jeweils verschiedene Arbeitspositionen durchlaufen und daher voneinander unabhängig gesteuert werden müssen, technisch außerordentlich aufwendig. Dies wird durch die Verwendung eines Drehtisches, der auf einem selbstständigen massiven Maschinenrahmen aufliegen muß, noch gesteigert. Der Drehtisch besitzt einen so großen Durchmesser, daß eine an der Seite des zu lötenden Kreissägeblattes stehende Bedienungsperson nicht ohne weiteres auf der anderen Seite der Anlage befindliche Teile erreichen kann, sondern zur Beseitigung von dort eventuell auftretenden Störungen um den Gerätekomplex herumgehen muß.

Demgegenüber liegt der Erfindung die Aufgabe zugrunde, eine Vorrichtung der eingangs genannten Art so weiterzubilden, daß sie unter Verringerung des erforderlichen maschinellen und steuerungstechnischen Aufwandes wesentlich kleiner und kompakter und damit leichter bedienbar wird.

Zur Lösung dieser Aufgabe sieht die Erfindung die im Anspruch 1 zusammengefaßten Merkmale vor.

Der erfindungsgemäßen Anordnung liegt die Erkenntnis zugrunde, daß es zu einem wesentlich geringeren technischen Aufwand führt, wenn man statt der Vielzahl von Greifzangen, die sich in einer gemeinsamen Drehung an mehreren Arbeitspositionen vorbeibewegen, eine einzige Zahn-Transporteinrichtung und eine einzige Lotplättchen-Transporteinrichtung vorsieht, die sich jeweils für jeden einzelnen Zahn und jedes einzelne Lotplättchen zwischen Aufnahmestellung für den Zahn bzw. das Lotplättchen und einer Abgabestellung hin- und herbewegen, wobei das Lotplättchen erst dann auf dem Hartmetallzahn aufgelegt wird, wenn dieser bereits an die Löthalterung übergeben worden ist. Diese Anordnung wird dann besonders einfach, wenn man die beiden Transporteinrichtungen zusammenfaßt, so daß nur ein einziger Schlitten zwischen den entsprechenden Arbeitspositionen hin- und herbewegt werden muß. Obwohl beim Zusammenstellen der jeweils an einen Zacken des Kreissägeblattes anzulötenden, aus einem Hartmetallzahn, einem Lotplättchen und dem dazwischen befindlichen Flußmittel bestehenden Einheit eine Reihe von zeitlich aufeinanderfolgenden Arbeitsschritten durchlaufen werden muß, ist die erfindungsgemäße lineare Anordnung insgesamt günstiger, als die aus dem Stand der Technik bekannte, und für derartige Arbeitszyklen allgemein als ideal geltende Drehtisch-Anordnung. Die erfindungsgemäße Vorrichtung kann nämlich nicht nur wesentlich kleiner und damit einfacher bedienbar und mit geringerem technischem Aufwand aufgebaut werden, sondern sie ist darüberhinaus in dem speziellen Anwendungsfall ohne weiteres in der Lage, wenigstens die gleiche Anzahl von Lötungen pro Zeiteinheit auszuführen, wie die bekannte Drehtischvorrichtung.

Die für einen kompletten Lötvorgang benötigte Zeit wird nämlich ausschließlich durch die Teilzeiten definiert, die erforderlich sind, um den Hartmetallzahn von der Transporteinrichtung an die Löthalterung zu übergeben, die Löthalterung in die Lötposition zu bewegen, die für die Lötung erforderliche Temperatur zu erzeugen und die Lötstelle wieder so weit abkühlen zu lassen, daß die Andrückkraft zwischen Sägeblatt-Zackenkante und Hartmetallzahn weggenommen werden kann, ohne daß die Gefahr eines Verschiebens oder gar Abfallens des Hartmetallzahns besteht. Dieser Zeitraum ist bei der bekannten Vorrichtung und bei der erfindungsgemäßen Vorrichtung etwa gleich groß und völlig ausreichend, um durch die sich bei der erfindungsgemäßen Vorrichtung hinund herbewegenden Transportvorrichtungen für den Hartmetallzahn und das Lötplättchen, die für den jeweils nächsten Lötvorgang benötigten Teile herbeizuschaffen, so daß auf die technisch aufwendige und kompliziert zu steuernde, die einzelnen Arbeitspositionen im Vergleich zum Lötvorgang viel zu schnell durchlaufende Drehtischanordnung verzichtet werden kann.

Eine besonders vorteilhafte Weiterbildung der erfindungsgemäßen Vorrichtung ist dadurch gekennzeichnet, daß bei ihr das Flußmittel nicht von oben auf die Lötseite des Hartmetallzahns aufgetropft wird, was bei der bekannten Vorrichtung dadurch geschieht, daß das nur bei erhöhter Temperatur flüssige Flußmittel ständig durch einen Schlauch umgepumpt wird, der an einer Stelle, an der er über die Bewegungsbahn der Greifzangen hinweg verläuft, an seiner Unterseite eine kleine Öffnung besitzt, durch die hindurch das Flußmittel auf den jeweils darunter befindlichen Hartmetallzahn aufgetropft wird. Dabei besteht die Gefahr, daß sich die Auftropföffnung mit erstarrendem Flußmittel zusetzt, so daß kein weiteres Flußmittel mehr auf die Zähne aufgetropft werden kann, wodurch die nachträglich aufgebrachten Lotplättchen abfallen können, so daß keine Lötungen mehr zustandekommen.

Demgegenüber wird bei der Anordnung gemäß der vorteilhaften Weiterbildung das Flußmittel in einem vergleichsweise kleinen, nach oben offenen Becken flüssig gehalten. Ein Rührarm, der um eine horizontale Achse verkippbar ist, taucht mit seinem vorderen Ende in das Flußmittel ein und wird dann, wenn sich das gegen die Unterseite eines Saugstempels angesaugte Lotplättchen über ihm befindet, so nach oben gekippt, daß er die Unterseite des Lotplättchens mit Flußmittel benetzt, das in Tropfenform auf seinem vor = deren Ende haften geblieben ist. Ein Verkleben oder Verstopfen dieser Vorrichtung kann nicht mehr eintreten und es wird mit hoher Zuverlässigkeit sichergestellt, daß zwischen jedem Hartmetallzahn und jedem Lotplättchen eine ausreichende Menge von Flußmittel vorhanden ist.

Ein besonderer Vorteil der erfindungsgemäßen Anordnung ist darin zu sehen, daß die aus jeweils einem Hartmetallzahn, Flußmittel und Lotplättchen bestehenden Einheiten nicht wie beim Stand der Technik in einer Transporteinrichtung zusammengestellt und dann komplett an die Löthalterung übergeben werden, sondern daß die Zusammenstellung dieser Einheiten in der Löthalterung selbst unmittelbar vor dem eigentlichen Lötvorgang erfolgt. Damit wird die Gefahr, daß ein bereits auf einen Hartmetallzahn aufgebrachtes Lotplättchen beim Transport zur Lötstelle wieder herunterfällt und damit zu einer schweren Störung des automatisch ablaufenden Lötvorganges führt auf doppelte Weise sehr stark vermindert, da zum einen die Übergabe des Hartmetallzahns von der Transporteinrichtung an die Löthalterung bei der erfindungsgemäßen Vorrichtung völlig unkritisch ist, weil das Lotplättchen erst nach dieser Übergabe auf den Zahn aufgelegt wird, und weil andererseits der Zeitraum, in dem ein aufgelegtes Lotplättchen von dem zugehörigen Hartmetallzahn herunterfallen kann, auf ein absolutes Minimum verringert ist. Außerdem kann die Erfindung noch so ausgeführt werden, daß unmittelbar vor der Lötstelle ein Sensor angeordnet, mit dessen Hilfe das Vorhandensein des Lotplättchens überprüft wird, so daß beim Fehlen eines Lotplättchens sofort ein Warnsignal erzeugt werden kann. Weitere Ausführungsarten der Erfindung sind in entsprechenden, abhängigen Patentansprüchen angegeben.

Die Erfindung wird im folgenden anhand eines Ausführungsbeispiels unter Bezugnahme auf die Zeichnung beschrieben; in dieser zeigt:

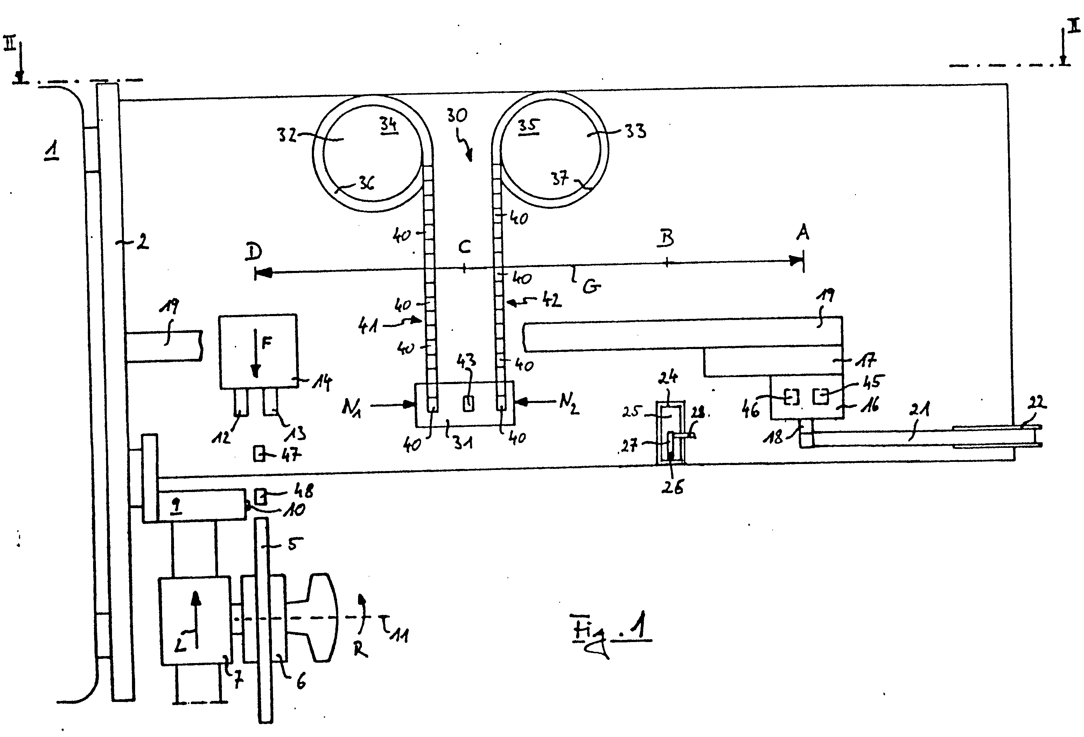

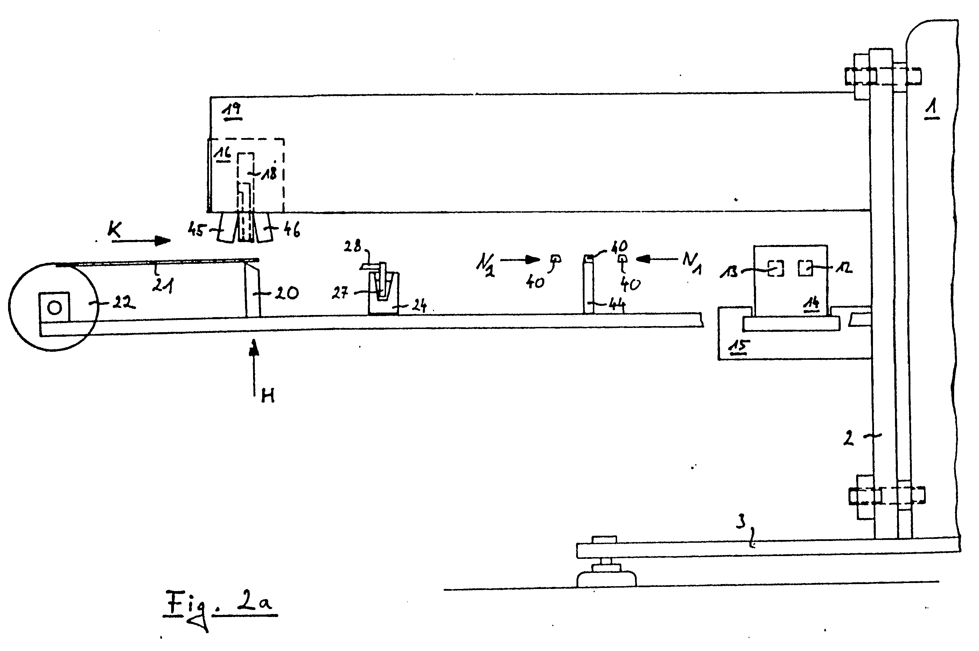

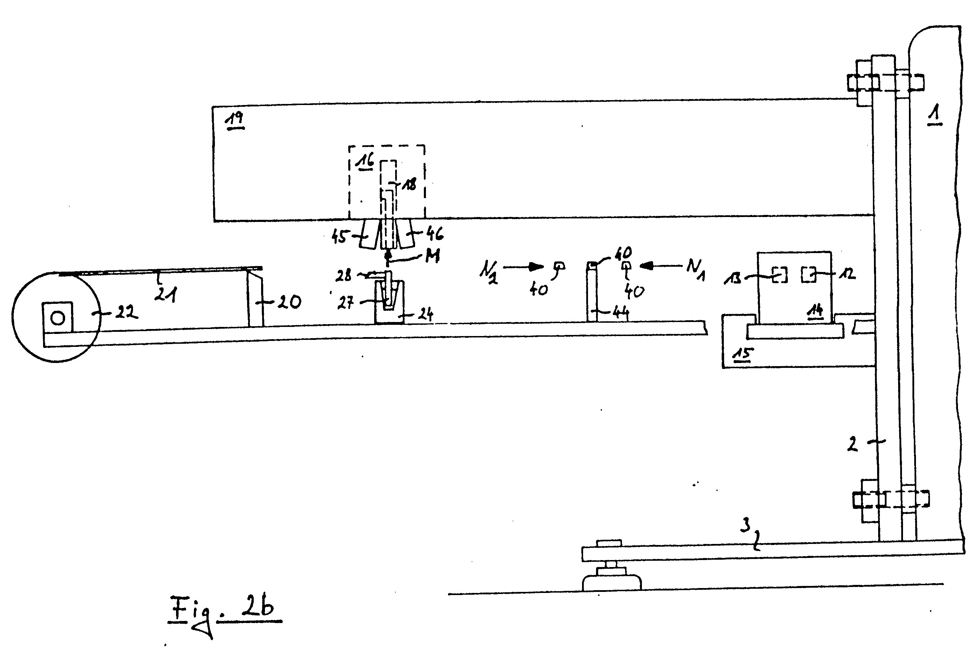

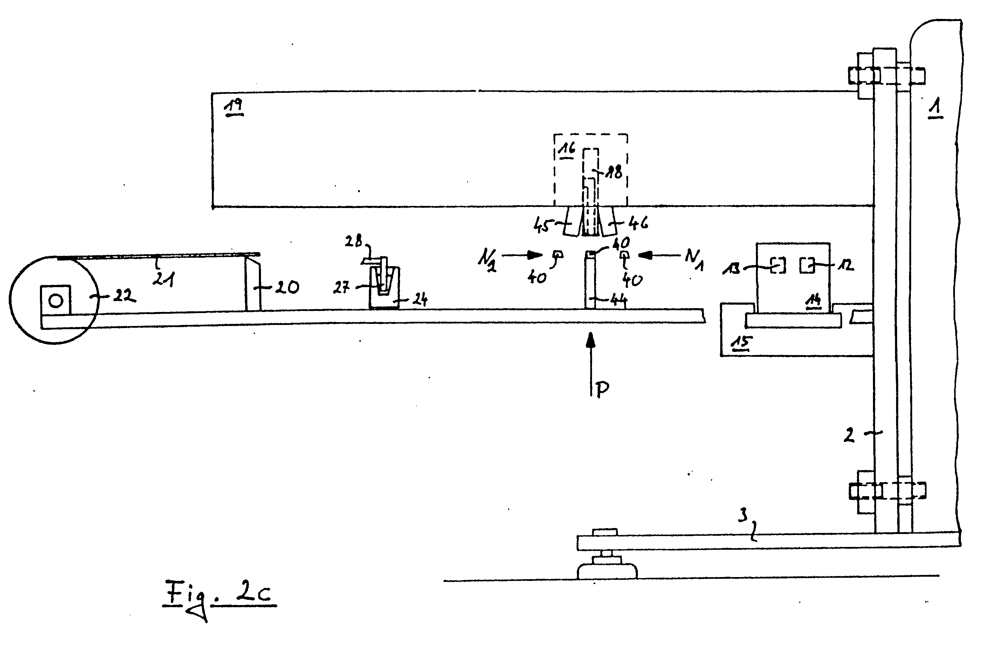

Fig. 1 eine schematische Draufsicht auf eine erfindungsgemäße Vorrichtung,

Fig. 2a bis 2d

Seitenansichten der Vorrichtung aus Fig. 1 in Richtung der Pfeile II-II, wobei sich die kombinierte Zahn- und Lotplättchen-Transporteinrichtung jeweils in einer der in Fig. 1 mit A bis D bezeichneten Positionen befindet, und

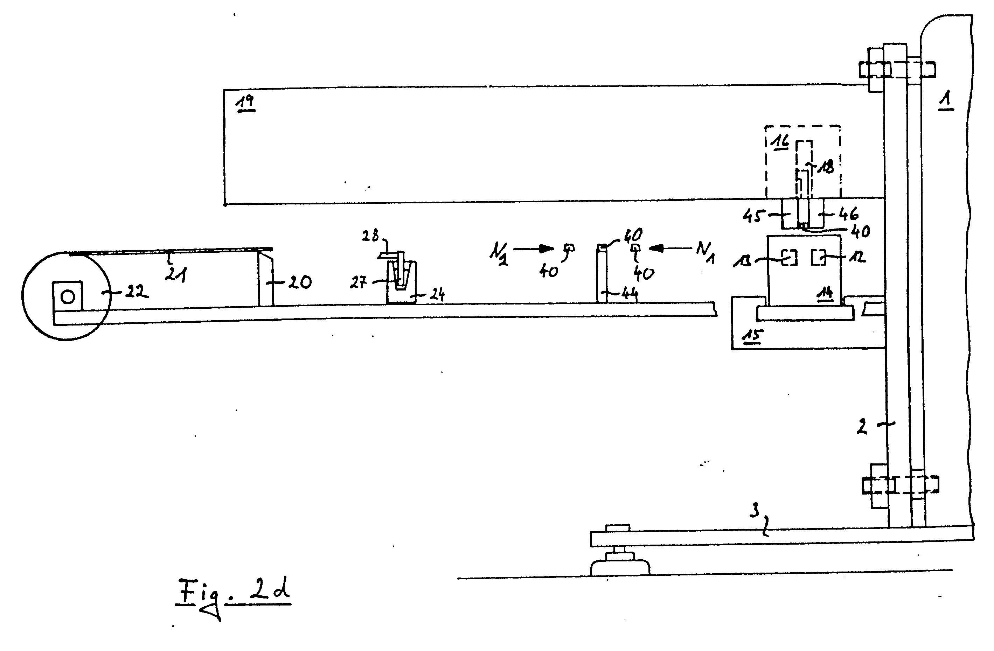

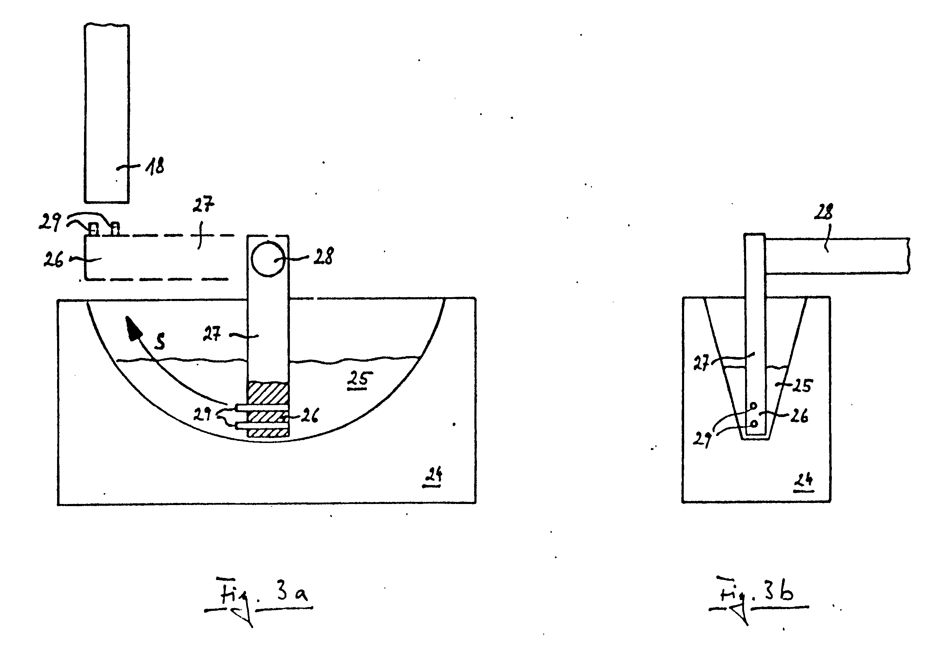

Fig. 3a und 3b eine schematische Seiten- und eine schematische Vorderansicht einer erfindungsgemäßen Vorrichtung zum Aufbringen von Flußmittel auf die Unterseite eines Lotplättchens.

Die erfindungsgemäße Vorrichtung ist so aufgebaut, daß sie keinen eigenen Maschinentisch benötigt. Vielmehr kann sie, wie die Figuren zeigen, an dem zur Erzeugung der hohen Löttemperaturen ohnehin benötigten Hochfrequenzgenerator 1 direkt mit Hilfe von Anbauplatten 2, 3 befestigt werden.

In Fig. 1 ist links unten das Sägeblatt 5 dargestellt, das in einen Schnellverschluß 6 eingespannt ist, der seinerseits an einem Schlitten 7 befestigt ist, mit dessen Hilfe das Sägeblatt 5 in Richtung des Pfeiles L in die Lötposition gefahren werden kann, in welcher die Antriebseinrichtung 9 mit ihrer Walze 10 an der Seitenfläche des Sägeblattes 5 anliegt, um dieses um seine in Fig. 1 gestrichelt dargestellte Achse 11 anzutreiben. Auf diese Weise können die einzelnen Zacken des Sägeblattes 5 der Reihe nach in die Lötposition gebracht und der jeweilige Zacken von oben gegen den anzulötenden Hartmetallzahn angedrückt werden, der zu diesem Zeitpunkt von den Backen 12, 13 der als Löthalterung dienenden Greifzange 14 gehalten wird. Dabei ist, anders als in Fig. 1 dargestellt, die Greifzange 14 mit Hilfe der nur in Fig. 2 wiedergegebenen Schlittenvorrichtung 15 in Richtung des Pfeiles F (Fig. 1) so weit zum Sägeblatt 5 hin verschoben, daß der für den nächsten Lötvorgang bestimmte Zacken des Sägeblattes 5 durch die Antriebsvorrichtung 9 von oben her gegen den von der Greifzange 14 gehaltenen Hartmetallzahn gepreßt werden kann, wobei sich zwischen diesem Zahn und dem Zacken des Sägeblattes 5 ein Lotplättchen und Flußmittel befindet.

In Fig. 1 ist die Greifzange 14 in ihrer von der Lötposition am weitesten entfernten Stellung, d.h. in ihrer Übernahmestellung dargestellt, in der sie einen von einer als Zahn-Transporteinrichtung dienenden zweiten Greifzange 16 herangebrachten Hartmetallzahn übernehmen kann, wenn sich die Zahn-Transporteinrichtung in ihrer Übergabeposition D befindet.(Siehe auch Fig. 2d).

Wie in Fig. 1 schematisch dargestellt, ist die Zahntransport-Greifzange 16 an einem Schlitten 17 befestigt, mit dessen Hilfe sie längs der Tragplatte 19 und senkrecht zur Bewegungsrichtung der Löthalterungs-Greifzange 14 in Richtung des Doppelpfeils G zwischen den Endpositionen A und D hinund hergeschoben werden kann.

In Fig. 1 befindet sich der Schlitten 17 in der von der Übergabeposition D am weitesten entfernten Endposition A, in der die Zahntransport-Greifzange 16 keine Funktion ausübt. Diese Endposition A ist vielmehr für eine an der vom Schlitten 17 abgewendeten Seite der Greifzange 16 befestigte Lotplättchen-Transporteinrichtung 18 von Bedeutung, die, wie in den Fig. 2a bis 2d schematisch dargestellt, als Saugstempel ausgebildet ist, mit dessen Hilfe ein Lotplättchen angesaugt und gehalten werden kann, das, wie in Fig. 2a schematisch angedeutet, mit Hilfe eines in Richtung des Pfeiles H beweglichen Messers 20 von einem Band 21 abgetrennt worden ist, das in Richtung des Pfeiles K von einer Spule 22 durch eine nicht dargestellte Vorrichtung intermittierend abgezogen wird.

Ist dies in der Position A erfolgt, so bewegt sich der Schlitten 17 in die Position B, in der sich die Lotplättchen-Transporteinrichtung 18 über einem Behälter 24 für Flußmittel 25 befindet. In das im Behälter 24 befindliche Flußmittel 25 taucht mit seinem vorderen Ende 26 ein Arm 27 ein, der vermittels einer horizontalen Welle 28 so verschwenkt werden kann, daß sich sein vorderes Ende 26 aus dem Flußmittel 25 heraus nach oben bewegt, wie dies in Fig. 2b durch den Pfeil M angedeutet ist. Dabei berührt das vordere Ende 26 des Arms 27 die Unterseite des vom Saugstempel 18 gehaltenen Lotplättchens und benetzt das Lotplättchen mit Flußmittel, das der Arm 27 aufgrund der speziellen Ausbildung seines vorderen Endes 26 mit nach oben genommen hat.

Dies ist genauer in den Fig. 3a und 3b dargestellt. Die gemäß Fig. 1 von rechts gesehene Seiten-Schnittansicht der Fig. 3a zeigt, daß der Innenraum des Behälters 24 in dieser Richtung einen teilkreisförmigen Querschnitt besitzt, dessen Mittelpunkt mit der Drehachse der Welle 28 zusämmenfällt. Dä durch kann der mit seinem vorderen Ende 26 fast bis zum Boden des Behälters 24 reichende Arm 27 durch eine Drehung der Welle 28 in Richtung des Pfeiles S in die in Fig. 3a mit gestrichelten Linien dargestellte Stellung angehoben werden, wobei er knapp an der Bodenwand des Behälters entlangstreicht. Das ist wichtig, weil hierdurch eine ständige gleichmäßige Durchmischung des Flußmittels 25 erreicht und die Ausbildung von toten Zonen verhindert wird, in denen es zu einer Verfestigung des Flußmittels kommen könnte. Der Vorderansicht der Fig. 3b entnimmt man, daß der Behälterinnenraum in dieser Richtung einen in etwa V-förmigen Querschnitt aufweist, was ebenfalls die Bildung toter Zonen im Flußmittel 25 verhindert.

In das vordere Ende 26 des Armes 27 sird zwei in der angehobenen Stellung der Fig. 3a nach oben über die Oberfläche des Armes 27 vorstehende Stifte 29 eingepreßt, die bewirken, daß der Arm 27 bei seiner Hubbewegung einen Tropfen des Flumittels mit nach oben nimmt, der genügend groß ist, um das vom Saugstempel 18 gehaltene, in Fig. 3a nicht dargestellte Lotplättchen an seineür Unterseite in der erforderlichen Weise zu benetzen. Die beiden Stifte 29 sind in Längsrichtung des Armes 27 etwas weniger weit voneinan der beabstandet, als ein vom Saugstempel 18 gehaltenes Lotplättchen in dieser Richtung lang ist.

Nachdem das Lotplättchen auf seiner Unterseite mit Flußmittel benetzt worden ist, bewegt sich der Schlitten 17 weiter in die Position C, in der sich die Zahntransport-Greifzange 16 über einer das Ende einer Hartmetallzahn-Zuführeinrichtung 30 bildenden Vereinzelungseinrichtung 31 befindet.

Wie man der Fig. 1 entnimmt, umfaßt die Hartmetallzahn-Zuführeinrichtung 30 zwei Orientierungsvorrichtungen 32, 33, in deren einen kreiszylindrischen Querschnitt besitzende, oben offene Behälter 34, 35 linke bzw. rechte Hartmetallzähne von oben eingefüllt werden. In an sich bekannter Weise führen diese Orientierungsvorrichtungen 32, 33 eine Vibrationsbewegung aus, die die auf dem Boden des Behälters 34 bzw. 35 liegenden Hartmetallzähne dazu veranlaßt, auf einer an der Behälterinnenwand angebrachten, nach oben ansteigenden Spiralbahn 36 bzw. 37 entlang zu wandern. Längs dieser Spiralbahnen sind in geeigneter Weise nicht dargestellte Abweisvorrichtungen und Schikanen angeordnet, die alle diejenigen Zähne, deren Lage bzw. Orientierung von einer vorgegebenen Soll-Lage abweicht, entweder in die richtige Lage drehen, oder in den Behälter 34 bzw. 35 zurückwerfen. Dies hat zur Folge, daß am oberen Ende der jeweiligen Spiralbahn 36 bzw. 37 kontinuierlich, d.h. dicht aneinander anschließend linke bzw. rechte Hartmetallzähne in einer Orientierung austreten, wie sie nachher für das Anlöten des jeweiligen Hartmetallzahns am Sägeblatt 5 benötigt wird.

Die am oberen Ende der Spiralbahnen 36, 37 austretenden Hartmetallzähne 40 werden mit Hilfe von geradlinigen Führungsbahnen 41, 42 der Vereinzelungsvorrichtung 31 zugeführt, die einen nicht dargestellten Schieber aufweist, dessen Funktion durch die beiden Pfeile $N_1$ und $N_2$ schematisch dargestellt ist.

Wie die Pfeile $N_1$ und $N_2$ andeuten, kann der Schieber in eine in Fig. 1 linke bzw. rechte Position verschoben werden, in der er den vordersten, in der Führungsbahn 41 bzw. 42 befindlichen Hartmetallzahn 40 übernimmt und in eine in Fig. 1 durch das Rechteck 43 angedeutete Mittelstellung befördert.

Hat ein Hartmetallzahn 40 diese Mittelstellung 43 erreicht, so bewegt sich, wie in Fig. 2c durch den Pfeil P angedeutet, ein Stempel 44 nach oben, der den Hartmetallzahn 40 so weit anhebt, daß er von den bis dahin geöffneten Greifbacken 45, 46 der Zahntransport-Greifzange 16 erfaßt werden kann.

Ist dies geschehen, so bewegt sich der Schlitten 17 in die Übergabeposition D, in der sich der Hartmetallzahn 40 so über den Greifbacken 12, 13 der vollständig in ihre Übernahmestellung zurückgezogenen Löthalterungs-Greifzange 14 befindet, daß er von diesen übernommen werden kann. Wenn dies geschehen ist, bewegt sich die Löthalterungs-Greifzange 14 in Richtung des Pfeiles F in Fig. 1 so weit nach vorn, daß der Hartmetallzahn 40 die durch das Rechteck 47 wiedergegebene Stellung einnimmt, in der er sich genau unter dem Saugstempel 18 befindet.

Zu diesem Zeitpunkt wird der Unterdruck, der das Lotplättchen an der Unterseite des Saugstempels 18 festgehalten hat, weggenommen, so daß das Lotplättchen auf die Oberseite des in der Position 47 befindlichen Hartmetallzahns abgelegt wird. Da die Unterseite des Lotplättchens in der Stellung B mit Flußmittel beschichtet worden war, befindet sich nunmehr das Flußmittel zwischen der Oberseite des Hartmetallzahns 40 und der Unterseite des aufgelegten Lotplättchens.

Im Anschluß hieran kann die Löthalterungs-Greifzange 14, wie dies oben bereits geschildert wurde, in ihre Lötposition vorfahren, wobei durch den Detektor 48 überprüft wird, ob sich tatsächlich ein Lotplättchen auf dem Hartmetallzahn befindet. Während des sich nunmehr anschließenden Lötvorganges kann die kombinierte Hartmetallzahn- und Lotplättchen-Transportvorrichtung 16, 17, 18 bereits wieder in die Ausgangsposition A zurückbewegt werden und den nächsten Arbeitszyklus durchlaufen.

Da der mit Hilfe einer induktiven HF-Heizvorrichtung durchgeführte Lötvorgang einschließlich Aufheizen und Abkühlen mehrere Sekunden in Anspruch nimmt, ist ausreichend Zeit, um die Hartmetallzahn- und Lotplättchen-Transporteinheit 16, 17, 18 gleichzeitig mit der Löthalterungs-Greifzange 14 in die Übergabeposition D gelangen zu lassen. Da sich die Löthalterungs-Greifzange 14 zwischen ihren beiden Endlagen sehr schnell hin- und herbewegen kann, wird die Gesamtlänge eines vollständigen Arbeitszyklus im wesentlichen durch die Länge des Lötvorganges selbst bestimmt.

**Patentansprüche:**

1. Vorrichtung zum automatischen Anlöten von Hartmetallzähnen (40) an die Zacken eines Kreissägeblattes (5) folgenden Merkmalen:
   a) Es sind eine die von einer Zahn-Zuliefereinrichtung (30) in definierter Lage bereitgestellten Hartmetallzähne einzeln übernehmende, zu einer Löthalterung (14) befördernde und an die Löthalterung übergebende Zahn-Transporteinrichtung (16,17),
   b) eine auf die nach oben weisende Lötseite der Hartmetallzähne jeweils ein Lotplättchen auflegende Lotplättchen-Ablegeeinrichtung (17,18) und
   c) eine Flußmittel (25) zwischen die Lötseite eines jeden Hartmetallzahns und das zugehörige Lotplättchen einbringende Flußmittel-Zuführeinrichtung (24,27) vorgesehen, und
   d) die Löthalterung (14) ist zwischen einer Übergabeposition,(D) in der sie den von der Zahn-Transporteinrichtung (16,17) herangebrachten Hartmetallzahn (40) übernimmt, und einer Lötposition hin- und herbewegbar, in der der mit Flußmittel (25) und Lotplättchen (21) versehene Hartmetallzahn während des Aufheiz-Löt- und Abkühlvorgangs mit dem Lotplättchen voraus gegen einen Zacken des Kreissägeblattes (5) andrückbar ist,
   und gekennzeichnet durch die Merkmale,
   e) daß die Zahn-Transporteinrichtung (16, 17) für jeden einzelnen Hartmetallzahn (40) zwischen der Zahn-Zuliefereinrichtung (30) und der Übergabeposition (D) hin- und herbewegbar ist,
   f) daß die Lotplättchen-Ablegeeinrichtung als Lotplättchen-Transporteinrichtung (17, 18) ausgebildet ist, die zwischen einer Lotplätztchen-Aufnahmeposition (A) und einer Lotplättchen-Ablegeposition (47) für jedes einzelne Lotplättchen hin- und herbewegbar ist, und
   g) daß die Lotplättchen-Ablegeposition (47) auf der Bewegungsbahn der Löthalterung (14) angeordnet ist.

2. Vorrichtung nach Anspruch 1, dadurch gekennzeichnet, daß die Lotplättchen-Transporteinrichtung (17, 18) auf einer horizontalen Bahn hin- und herbewegbar ist und eine das Lotplättchen nach oben anhebende und haltende Saugeinrichtung (18) umfaßt.

3. Vorrichtung nach Anspruch 2, dadurch gekennzeichnet, daß die Flußmittel-Zuführeinrichtung (24 bis 29) im Bereich der Bewegungsbahn der Lotplättchen-Transporteinrichtung (17, 18) angeordnet ist und einen das Lotplättchen von unten mit Flußmittel (25) benetzenden Arm (27) aufweist.

4. Vorrichtung nach einem der vorhergehenden Ansprüche, dadurch gekennzeichnet, daß die Zahn-Transporteinrichtung (16, 17) eine den Hartmetallzahn (40) von einer Vereinzelungseinrichtung (31) übernehmende Greifzange (16) umfaßt.

5. Vorrichtung nach einem der vorhergehenden Ansprüche, dadurch gekennzeichnet, daß die Vereinzelungseinrichtung (31) einen zwischen zwei Endlagen hin- und herbewegbaren Schieber umfaßt, dem in der einen Endlage ein von der Zahn-Zuliefereinrichtung (30) bereitgestellter "linker" Hartmetallzahn (40) und in der anderen Endlage ein von der Zahn-Zuliefereinrichtung (30) bereitgestellter "rechter" Hartmetallzahn (40) zuführbar ist und der in eine Mittelposition (43) bringbar ist, in der der jeweils im Schieber enthaltene Hartmetallzahn (40) von der Greifzange (16) übernehmbar ist.

6. Vorrichtung nach Anspruch 5, dadurch gekennzeichnet, daß der Schieber unter der Bewegungsbahn der Greifzange (16) angeordnet ist und daß ein in der Mittelposition (43) den im Schieber befindlichen Hartmetallzahn (40) anhebender Stößel (44) vorgesehen ist.

7. Vorrichtung nach einem der vorhergehenden Ansprüche, dadurch gekennzeichnet, daß die Zahn-Transporteinrichtung (16, 17) und die Lotplättchen-Transporteinrichtung (17, 18) an einem gemeinsamen, zwischen zwei Endlagen (A, D) hin- und herbewegbaren Schlitten (17) angeordnet sind, daß die eine Endstellung des Schlittens (17) mit der Übergabeposition (D) der Löthalterung (14) zusammenfällt und daß sich die von der Übergabeposition (D) zur Lötposition verlaufende Bewegungsbahn der Löthalterung (14) in dieser Endstellung des Schlittens (17) unter der Lotplättchen-Ablegeeinrichtung (18) hindurch erstreckt.

8. Vorrichtung nach Anspruch 7, dadurch gekennzeichnet, daß die andere Endstellung (A) des Schlittens (17) mit der Lotplättchen-Aufnahmeposition der Lotplättchen-Transporteinrichtung (17, 18) zusammenfällt.

9. Vorrichtung nach Anspruch 8, dadurch gekennzeichnet, daß der Schlitten (17) zwischen seinen beiden Endstellungen (A, D) zwei Zwischenstellungen (B, C) besitzt, von denen die eine (B) zum Aufbringen des Flußmittels (25) auf das Lotplättchen und die andere (C) zur Übernahme eines vereinzelten Hartmetallzahns (40) durch die Zahn-Transporteinrichtung (16, 17) dient.

10. Vorrichtung nach einem der vorhergehenden Ansprüche, dadurch gekennzeichnet, daß die Löthalterung (14) als wasserkühlbare Greifzange ausgebildet ist.

11. Vorrichtung nach einem der vorhergehenden Ansprüche, dadurch gekennzeichnet, daß an der Bewegungsbahn der Löthalterung (14) unmittelbar vor der Lötposition ein das Aufliegen des Lotplättchens auf dem Hartmetallzahn (40) überwachender Sensor (48) angeordnet ist.

12. Vorrichtung nach einem der Ansprüche 3 mit 11, dadurch gekennzeichnet, daß die Flußmittel-Zuführeinrichtung (24 bis 29) einen oben offenen Behälter (24) für das Flußmittel (25) umfaßt, dessen Innenraum in einer vertikalen Ebene einen teilkreisförmigen Querschnitt aufweist, und daß der Arm (27) um eine horizontale Welle (28) drehbar ist, die über dem Behälter (24) so angeordnet ist, daß ihre Drehachse durch den Mittelpunkt des Teilkreises verläuft.

13. Vorrichtung nach Anspruch 12, dadurch gekennzeichnet, daß der Arm (27) mit seinem vorderen Ende (26) bis fast auf den Boden des Behälters (24) reicht.

14. Vorrichtung nach Anspruch 12 oder 13, dadurch gekennzeichnet, daß der Innenraum des Behälters (24) in der zur Bewegungsebene des Arms (27) senkrechten vertikalen Ebene einen in etwa V-förmigen Querschnitt aufweist.

15. Vorrichtung nach einem der Ansprüche 12 bis 14, dadurch gekennzeichnet, daß das vordere Ende (26) des Arms (27) zwei in Längsrichtung des Arms voneinander beabstandete, in der angehobenen Stellung des Arms (27) über dessen Oberseite nach oben vorstehende Erhebungen aufweist.

16. Vorrichtung nach Anspruch 15, dadurch gekennzeichnet, daß die Erhebungen von zwei in entsprechende Bohrungen des Arms (27) eingepreßten Stiften (29) gebildet sind.

## Claims:

1. Apparatus for the automatic soldering of hard metal teeth (40) on to the prongs of a circular saw blade (5) with the following features:

   a) There are provided a tooth transport equipment (16, 17) individually taking over hard metal teeth placed ready in defined position by a tooth feeding equipment (30) and transporting and transforming them to a soldering mount (14),

   b) a solder platelet deposit equipment (17, 18) laying a respective solder platelet on the upward facing soldering side of each of the hard metal teeth and

   c) a fluxing agent feeding equipment (24, 27) introducing a fluxing agent (25) between the soldering side of each hard metal tooth and the associated solder platelet, and

   d) the soldering mount (14) is movable to and fro between a transfer position (D), in which it takes over the hard metal tooth (40) brought forward by the tooth transport equipment (16, 17), and a soldering position, in which the hard metal tooth provided with fluxing agent (25) and a solder platelet (21) is pressable with the solder platelet forward against a prong of the circular saw blade (5) during the heating-up, soldering and cooling-down operations, and characterised by the following features,

   e) that the tooth transport equipment (16, 17) is movable to and fro between the tooth feeding equipment (30) and the transfer position (D) for each individual hard metal tooth (40),

   f) that the solder platelet deposit equipment is constructed as solder platelettransport equipment (17, 18), which is movable to and fro for each individual solder platelet between a solder platelet receiving position (A) and a solder platelet deposit position (47) and

   g) that the solder platelet deposit position (47) is arranged on the movement path of the soldering mount (14).

2. Apparatus according to claim 1, characterised thereby, that the solder platelet transport equipment (17, 18) is movable to and fro on a horizontal path and comprises a suction equipment (18) upwardly lifting and retainig the solder platelet.

3. Apparatus according to claim 2, characterised thereby, that the fluxing agent feeding equipment (24 to 29) is arranged in the region of the movement path of the solder platelet transport equipment (17, 18) and displays an arm (27) wetting the solder platelet with fluxing agent (25) from below.

4. Apparatus according to one of the preceding claims, characterised thereby, that the tooth transport equipment (16, 17) comprises a gripper tongs (16) taking the hard metal tooth (40) over from a singling equipment (31).

5. Apparatus according to one of the preceding claims, characterised thereby, that the singling equipment (31) comprises a slide which is movable to and fro between end positions and to which a "lefthand" hard metal tooth (40) placed ready by the tooth feeding equipment (30) is feedable in the one end position and a "righthand" hard metal tooth (40) placed ready by the tooth feeding equipment (30) is feedable in the other end position and which is bringable into a mid-position (43), in which the hard metal tooth (40) respectively contained in the slide can be taken over by the gripper tongs (16).

6. Apparatus according to claim 5, characterised thereby, that the slide is arranged below the movement path of the gripper tongs (16) and that a push rod (44) is provided, which in the mid-position (43) lifts the hard metal tooth (40) disposed in the slide.

7. Apparatus according to one of the preceding claims, characterised thereby, that the tooth transport equipment (16, 17) and the solder platelet transport equipment (17, 18) are arranged on a common carriage (17), which is movable to and fro between two positions (A, D), that the one end position of the carriage (17) co-incides with the transfer position (D) of the soldering mount (14) and that the movement path, extending from the transfer position (D) to the soldering position, of the soldering mount (14) extends in this end position of the carriage (17) through below the solder platelet deposit equipment (18).

8. Apparatus according to claim 7, characterised thereby, that the other end position (A) of the carriage (17) co-incides with the solder platelet receiving position of the solder platelet transport equipment (17, 18).

9. Apparatus according to claim 8, characterised thereby, that the carriage (17) between both its end positions (A, D) possesses two intermediate positions (B, C), of which the one (B) serves for the application of the fluxing agent (25) onto the solder platelet and the other (C) for the taking-over of a singled hard metal tooth (40) by the tooth transport equipment (16, 17).

10. Apparatus according to one of the preceding claims, characterised thereby, that the soldering mount (14) is constructed as water-cooled gripper tongs.

11. Apparatus according to one of the preceding claims, characterised thereby, that a sensor (48), monitoring the resting of the solder platelet on the hard metal tooth (40),is arranged immediately before the soldering position at the movement path of the soldering mount (14).

12. Apparatus according to one of the claims 3 to 11, characterised thereby, that the fluxing agent feeding equipment (24 to 29) comprises an upwardly open container (24) for the fluxing agent (25), the interior space of which displays a part-circular cross-section in a vertical plane, and that the arm (27) is rotatable about a horizontal shaft (28), which is so arranged above the container (24) that its axis of rotation extends through the centre of the partial circle.

13. Apparatus according to claim 12, characterised thereby, that the arm (27) by its front end (26) reaches nearly to the bottom of the container (24).

14. Apparatus according to claim 12 or 13, characterised thereby, that the interior space of the container (24) displays an about V-shaped cross-section in the vertial plane perpendicular to the movement plane of the arm (27).

15. Apparatus according to one of the claims 12 to 14, characterised thereby, that the front end (26) of the arm (27) displays two protrusions which are spaced one from the other in longitudinal direction of the arm and, in the raised position of the arm (27), protrude upwardly beyond its upper side.

16. Apparatus according to claim 15, characterised thereby, that the protrusions are formed by two pins (29) pressed into corresponding bores of the arm (27).

**Revendications**

1) Dispositif pour braser automatiquement des dents en métal dur (40) sur les pointes d'une lame de scie circulaire (5), présentant les particularités suivantes:

a) il est prévu un dispositif transporteur de dents (16, 17) reprenant individuellement les dents en métal dur préparées dans une position définie par un dispositif d'amenée de dents (30), et les transmettant à la monture de brasage (14),

b) il est prévu un dispositif de dépôt de plaquettes de bras (17, 18) déposant une plaquette de brasage sur le côté de brasage, tourné vers le haut, de chacune des dents en métal dur, et

c) il est prévu un dispositif d'amenée de flux (24, 27) introduisant du flux (25) entre le côté de brasage de chacune des dents en métal dur et la plaquette de brasage correspondant, et

d) la monture de brasage (14) peut aller et venir entre une position de transfert (D) dans laquelle elle reprend la dent en métal dur amenée par le dispositif transporteur de dents (16, 17) et une position de brasage dans laquelle la dent en métal dur munie de flux (25) et d'une plaquette de brasage (21) peut, pendant le processus de chauffage initial, de brasage et de refroidissement, être poussée, la plaquette de brasage en avant, contre une pointe de la lame de scie circulaire (5), et caractérisé par les points suivants:

e) le dispositif transporteur de dents (16, 17) peut, pour chacune des dents en métal dur (40), aller et venir entre le dispositif d'amenée de dents (30) et la position de transfert (D),

f) le dispositif de dépôt de plaquettes de brasage est conçu sous forme de dispositif transporteur de plaquettes de brasage (17, 18) qui peut aller et venir entre une position de réception de plaquettes de brasage (A) et une position de dépôt de plaquettes de brasage (47), pour chacune des plaquettes de brasage, et g) la position de dépôt de plaquette de brasage (47) est située sur la voie de mouvement de la monture de brasage (14).

2) Dispositif selon la revendication 1, caractérisé en ce que le dispositif transporteur de plaquettes de brasage (17, 18) peut aller et venir sur une voie horizontale et comprend un dispositif d'aspiration (18) soulevant vers le haut et retenant la plaquette de brasage.

3) Dispositif selon la revendication 2, caractérisé en ce que le dispositif d'amenée de flux (24 à 29) est disposé dans la région de la trajectoire du dispositif transporteur de plaquettes de brasage (17, 18) et présente un bras (27) qui mouille de flux (25), par le bas, la plaquette de brasage.

4) Dispositif selon l'une des revendications précédentes, caractérisé en ce que le dispositif transporteur de dents (16, 17) comprend une pince preneuse reprenant la dent en métal dur (40) d'un dispositif de séparation (31).

5) Dispositif selon l'une des revendications précédentes, caractérisé en ce que le dispositif de séparation (31) comprend un poussoir pouvant aller et venir entre deux positions extrêmes, auquel peut être amenée dans l'une des positions extrêmes, une dent en métal dur "gauche" (40) préparée par le dispositif d'amenée de dents (30) et dans l'autre position extrême, une dent en métal dur "droite" (40) préparée par le dispositif d'amenée de dents (30) et qui peut être amené à une position moyenne (43) dans laquelle la dent en métal dur (40) momentanément contenue dans le poussoir, peut être reprise par la pince preneuse (16).

6) Dispositif selon la revendication 5, caractérisé en ce que le poussoir est disposé sous la trajectoire de la pince preneuse (16) et qu'il est prévu un poinçon (44) qui, dans la position moyenne (43) soulève la dent en métal dur (40) qui se trouve dans le poussoir.

7) Dispositif selon l'une des revendications précédentes, caractérisé en ce que le dispositif transporteur de dents (16, 17) et le dispositif transporteur de plaquettes de brasage (17, 18) sont disposés sur un coulisseau commun (17) pouvant aller et venir entre deux positions extrêmes (A, D), en ce que l'une des positions extrêmes du coulisseau (17) coïncide avec la position de transfert (D) de la monture de brasage (14), et en ce que la trajectoire de la monture de brasage (14), allant de la position de transfert (D) à la position de brasage, passe, dans cette position extrême du coulisseau (17), par dessous le dispositif de dépôt de plaquettes de brasage (18).

8) Dispositif selon la revendication 7, caractérisé en ce que l'autre position extrême (A) du coulisseau (17) coïncide avec la position de réception de plaquettes de brasage du dispositif transporteur de plaquettes de brasage (17, 18).

9) Dispositif selon la revendication 8, caractérisé en ce que le coulisseau présente, entre ses deux positions extrêmes (A, D), deux positions intermédiaires (B, C), dont l'une (B) sert à l'application du flux (25) sur la plaquette de brasage et l'autre (C) à la reprise d'une dent en métal dur séparée (40) par le dispositif transporteur de dents (16, 17).

10) Dispositif selon l'une des revendications précédentes, caractérisé en ce que la monture de brasage (14) est conçue sous forme de pince preneuse pouvant être refroidie à l'eau.

11) Dispositif selon l'une des revendications précédentes, caractérisé en ce que sur la trajectoire de la monture de brasage (14), immédiatement avant la position de brasage, est disposé un capteur (48) surveillant l'application de la plaquette de brasage sur la dent en métal dur (40).

12) Dispositif selon l'une des revendications 3 à 11, caractérisé en ce que le dispositif d'amenée de flux (24 à 29) comprend un récipient ouvert en haut (24) destiné au flux (25) et dont l'intérieur présente dans un plan vertical une section en forme de portion de cercle, et en ce que le bras (27) peut tourner autour d'un arbre horizontal (28) qui est disposé au-dessus du récipient (24), de telle sorte que son axe de rotation passe par le centre du cercle partiel.

13) Dispositif selon la revendication 12, caractérisé en ce que le bras (27), par son extrémité antérieure (26), arrive presque jusqu'au fond du récipient (24).

14) Dispositif selon l'une des revendications 12 et 13, caractérisé en ce que l'intérieur du récipient (24) présente, dans le plan vertical perpendiculaire au plan de mouvement du bras (27), une section à peu prés en V.

15) Dispositif selon l'une des revendications 12 à 14, caractérisé en ce que l'extrémité antérieure (26) du bras (27) présente deux saillies espacées l'une de l'autre dans la direction longitudinale du bras et qui, dans la position levée du bras, dépassent vers le haut le côté supérieur de celui-ci. 16) Dispositif selon la revendication 15, caractérisé en ce que les saillies sont formées par des goupilles (29) enfoncées dans des perforations correspondantes du bras (27).

Fig. 1

0 088 401

Fig. 2a

Fig. 2b

Fig. 2c

Fig. 2d

Fig. 3a

Fig. 3b